Europäisches Patentamt

(19) European Patent Office

Office européen des brevets

(11) Publication number: 0 204 595

A2

(12) **EUROPEAN PATENT APPLICATION**

(21) Application number: **86400978.2**

(22) Date of filing: **06.05.86**

(51) Int. Cl.⁴: **A 23 G 3/28**
**A 23 G 3/20**

(30) Priority: **16.05.85 US 734540**

(43) Date of publication of application:
**10.12.86 Bulletin 86/50**

(84) Designated Contracting States:
**AT BE CH DE FR GB IT LI LU NL SE**

(71) Applicant: **NABISCO BRANDS INC.**
**Nabisco Brands Plaza**
**Parsippany New Jersey 07054(US)**

(72) Inventor: **Selis, Edward W.**
**40 Berkshire Place**
**Allendale New Jersey 07463(US)**

(72) Inventor: **Carroll, George W.**
**226 Gerrace Road**
**Franklin Lakes New Jersey 07414(US)**

(74) Representative: **Bonnetat, Christian et al,**
**Cabinet PROPI Conseils 23 rue de Léningrad**
**F-75008 Paris(FR)**

(54) Dispenser for decorative edible materials.

㊼ A dispenser has an inner rotating drum having through passages therein. The passages receive articles therein from a supply of articles loosely contained inside the inner drum. The inner drum has an outer generally cylindrical periphery concentrically spaced within a stationery, generally cylindrical, recess in a stationary outer member. A slot at the bottom of the outer member permits release of articles from the passages. A stationary blocking member overlies the bores at a location above a lower portion of the inner drum, and generally over the slot. The blocking member is disposed closely adjacent the inner drum, so as to prevent entry of additional articles into each bore when the bore is in communication with the slot. Thus, only an amount of articles sufficient to fill a bore are dispensed from the bore when the bore direclty overlies the slot. A stationary front wall prevents loss of articles from the inner drum, in cooperation with a rotating rear wall which supports the inner drum.

Fig.1

DECORETTE DISPENSER

This invention relates to an apparatus for dispensing predetermined amounts of decorettes in a predetermined pattern.

This invention may also be adapted for use in dispensing other articles, for example it may be adapted for use in dispensing grain, chocolate chips, ball bearings, tacks, and other articles.

It is well-known to apply decorettes to comestible articles, for example to the tops of cookies, pies, and any other articles, by manually sprinkling decorettes upon the articles. Shakers such as salt shakers and the like can be used to be manually shaken above an article to which decorettes are to be applied. Also well-known in the art are comestible articles disposed about the periphery of sandwich-type products wherein the middle layer is capable of adhering sufficiently to the articles to retain them.

An example of the latter type of laminated comestible product is that shown in U.S. Patent No. 3,851,084 to Rossen et al., drawn to a method of producing laminated comestible products. In particular, figure 12 shows a laminate-type arrangement having solid particles attached about the periphery of what appears to be a lower layer. Also, figures 9 and 10 show generally semi-circular or somewhat cylindrical articles having solid articles attached about the outer periphery thereof. The Rossen et al. Patent relies upon coextrusion to obtain the finished product, and does not use air to cause particles to be applied to be distributing pnuematically about the periphery of an object to which the articles are to be adhered. Further, no article dispenser is taught for dispensing articles from a rotating drum.

An example of an ice cream-type sandwich having chocolate chips distributed about the ice cream layers periphery is that shown in the pending Trademark Application Serial No. 320,096 in the name of the Applicant Richard LaMotta. The pending application depicts an ice cream sandwich of the type discussed having a bite taken therefrom, revealing that the outer layer alone carries the chocolate chips. No article dispenser is shown in this reference, however,

U.S. Patent No. 4,352,831 to Caveanagh et al. relates to a method for manufacturing wafers wherein individual articles 30,32 are applied about the

3

periphery of a rotating member 20. As sheet material 10 passes between a pair of rollers, one of which is the rotating member 20, the articles carried by the roller 20 are impressed into the wafer material 10. However, air is not used to apply individual articles about the periphery of an object to which the articles are to adhere. No article dispenser is shown, however, for dispensing articles in time relationship by gravity.

An example of an confection coating machine is that shown by U.S. Patent No. 1,711,716 to Bausman. Figures 3 and 4 show dropping of particulate or shredded material atop objects which are to carry the particulate or shredded material, the objects being carried by a moving conveyor belt. No article dispenser is shown, however, for dispensing articles in timed relationship gravity.

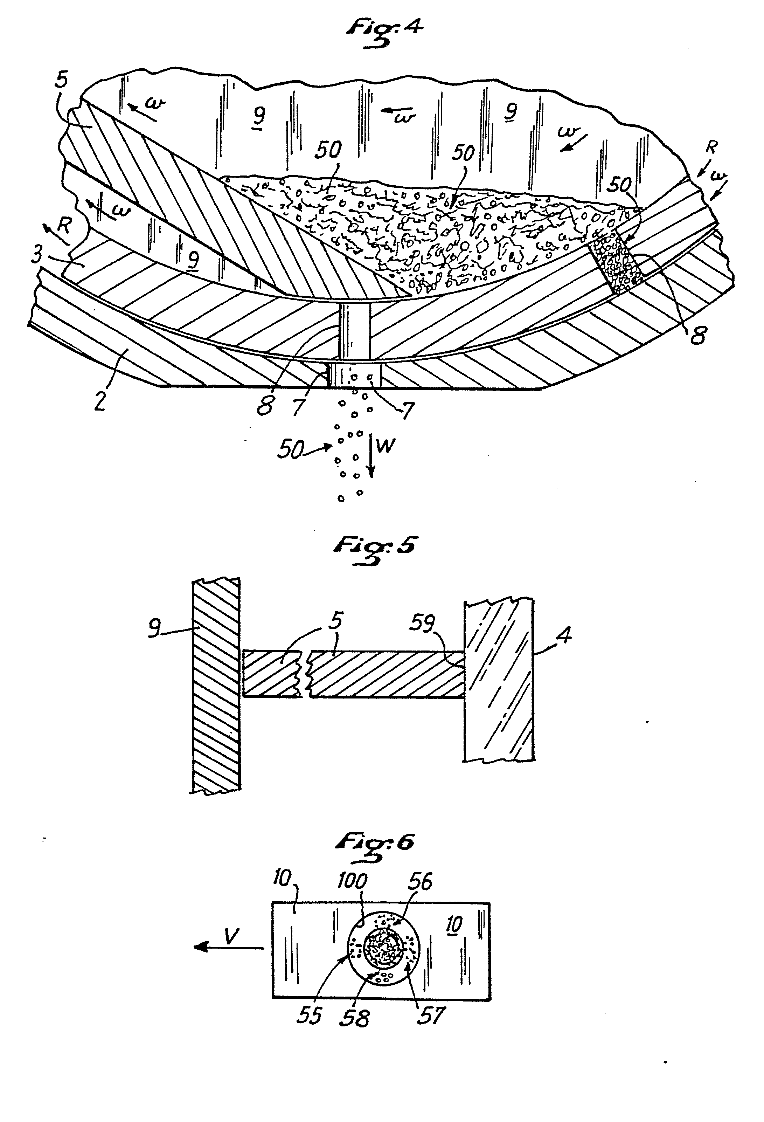

U.S. Patent No. 2,246,871 relates to a method and means for introducing edible semisolids onto ice cream, the final product appearing in figure 4 of the Patent. This invention relies upon a type of injection or coextrusion of ice cream and edible semisolids in the same tubular conduit. Air is not used to carry individual particles for adhering about the periphery of the ice cream. No article dispenser is shown, however, for dispensing articles in timed relationship by

4

gravity.

U.S. Patent No. 3,307,517 relates to a coating apparatus for applying a coating of dry particulate material to frozen confectionary products such as ice cream bars. However, it appears, for example from figures 21 and 22, that the frozen confectionary products are merely dipped into the particulate material for adhering thereto. Further, no article dispenser is taught for dispensing articles from a rotating drum.

U.S. Patent No. 3,363,586 to Jernigan et al. relates to a method and apparatus for producing decorated confections. Here, edible decorative particles are dropped onto moving bars in timed relationship to a severing step, after which the decorated bars are solified and hardened. No swirling of particles about the bars is taught, the particles evidently adhering merely by the operation of dropping them upon the underlying object. Further, no article dispenser is taught for dispensing articles from a rotating drum.

U.S. Patent 3,911,155 to Ferrero relates to a method of decorating raw doughs of confectionary products to be baked. Here, colored small granules of puffed cereals which are covered with a layer of colored sugar are baked after being applied atop a raw dough.

5

No article dispenser is shown, however, for dispensing articles in timed relationship by gravity.

A patent which is somewhat close in structure to the concept of the present invention is that to Grunstad et al. U.S. Patent No. 4,047,637, which relates to a paper clip dispenser having a rotary drum. However, this patent is far in purpose from the present invention. In Grunstad, slots receive the individual paper clips and move them to another location where a magnet 32 receives them. Here, the paper clips are rotated within an outer cylinder by an inner cylinder. However, there is no teaching in this reference of an inner rotating drum receiving predetermined amounts of decorettes and dispensing them in timed relationship so as to fall in a predetermined pattern upon a synchronized, moving tray.

Molins, U.S. Patent No. 3,570,557 shows an inner cylinder rotating within an outer cylinder to dispense material into small pockets. The outer cylinder 5 is stationary and an inner cylinder 3 having holes 6 receives particulate material from a supply 2. However, there is no teaching in this reference of an inner rotating drum receiving predetermined amounts of decorettes and dispensing them in timed relationship so as to fall in a predetermined pattern upon a

6

synchronized, moving tray.

U.S. Patent No. 32,949,997 to Martell is of interest for the dispensing device of figures 4-6 showing a rotary tray having a plurality of holes therein for feeding particulate material. This is used for dispensing pharmaceutical forms such as capsules, tablets, pellets, or troches. However, there is no teaching in this reference of an inner rotating drum receiving predetermined amounts of decorettes and dispensing them in timed relationship so as to fall in a predetermined pattern upon a synchronized, moving tray.

The U.S. Patent 3,243,183 to DeScrange, relates to swirling of particles, shown in figure 4, by rotary motion of a drum 71, and is used for artificial snowmaking for the top of a tree. This device, however, merely sprinkles and dispenses particles outward from the rotating cylinder, and does not employ air pressure or gravity to distribute the particles about the periphery of an article. However, there is no teaching in this reference of an inner rotating drum receiving predetermined amounts of decorettes and dispensing them in timed relationship so as to fall in a predetermined pattern upon a synchronized, moving tray.

7

The apparatus of the present invention solves the problem of dispensing decorettes or other particulate material about the periphery of a moving object. In particular, a measured amount of decorettes are dispensed in synchronized, timed relationship onto moving trays, each tray having a recess receiving a cookie formed in layers, as taught in the above-identified co-pending application. The middle layer has a tacky surface to which the decorettes stick. The moving trays have perforations therein for transmitting air under pressure from an external air source, directed into the interior of the tray in a tangential direction so as to cause rotary motion of the decorettes are collected, and the middle cookie layer is usually of a white or light color which readily shows the colored decorettes.

A dispenser has an inner rotating drum having through passages therein. The passages receive articles therein from a supply of articles loosely contained inside the inner drum. The inner drum has an outer stationary, generally cylindrical, recess in a stationary outer member. A slot at the bottom of the outer member permits release of articles from the passages.

8

A stationary blocking member overlies the bores at a location above a lower portion of the inner drum, and generally over the slot. The blocking member is disposed closely adjacent the inner drum so as to prevent entry of additional articles into each bore when the bore is in communication with the slot. Thus, only an amount of articles sufficient to fill a bore are dispensed from the bore when the bore directly overlies the slot. A stationary front wall prevents loss of articles from the inner drum, in cooperation with a rotating rear wall wihch supports the inner drum. Additional articles can be added to the inner drum wtihout stopping its rotation by insertion above the top edge of the front wall, which is spaced beneath the axis of the inner drum.

The apparatus includes trays, as taught in the above-identified co-pending application, each tray having a recess therein to receive an insert member which directs air flow, the insert member enclosing a region which receives a laminated cake such as a creme-filled cookie. An air passage in each tray communicates with an air supply and with the insert member to supply air. The trays are moved past a decorette receiving station and an air supply station to swirl the decorettes about the cake. The trays are moved by a pair of chain conveyors, the trays being inverted to empty each tray of the cake and excess decorettes.

Advantages of the present invention include economical use of the decorettes, as well as a great variety in the appearance of the final objects which carry the decorettes such that no two are exactly identical in appearance. Another advantage is the synchronized, predetermined placement of predetermined amounts of decorettes onto a moving tray. Furthermore, the final product having decorettes is made without physically rolling the article or applying forces to the periphery thereof which would tend to distort or deform the object. This is particularly important where the sandwich-type cookies or cakes have ingredients which are still warm and soft, and which could easily be deformed by excessive handling or by the application of force such as a direct-contact roller against the periphery, which would tend to deform the sandwich-type cookie or cake. In particular, the center filling material of a sandwich-type cookie such as is well-known in the art receives decorettes which adhere to the still-soft creamy filling material. When this material hardens, the decorettes are relatively strongly attached thereto.

10

Where, as here, the filling material is tacky and soft while hot, the decorettes cannot readily be applied by rolling the cookies against a surface containing decorettes, since the filling material would tend to adhere to such surface. Therefore, the present invention solves the problem of dispensing decorettes about the periphery of an object in predetermined amounts and in a predetermined pattern.

The apparatus of the present invention, while useful in dispensing decorettes, is not limited thereto, but may advantageously be used for dispensing any articles such as chocolate chips, marbles, medicinal powders and time-capsules, ball bearings, and the like.

Further details and advantages of the present invention appear from the following description of a preferred embodiment shown schematically in the drawings.

Figure 1 is a front elevational view of a decorette dispenser according to the present invention;

Figure 2 is a side elevational view of the dispensr of Figure 1 as seen from the left of Figure 1;

Figure 3 is a sectional view taken along line 3-3 of Figure 1;

Figure 4 is an enlarged view of the bottom portion of the dispenser as taken along line 4-4 of Figure 2 showing dispensing of articles;

Figure 5 is a sectional side view taken in the direction of line 5-5 of Figure 1, showing the attachment of a blocking member to a front wall;

Figure 6 is a top elevational view of a moving tray showing the resulting pattern of decorettes dispensed about a comestible object by the apparatus according to the present invention.

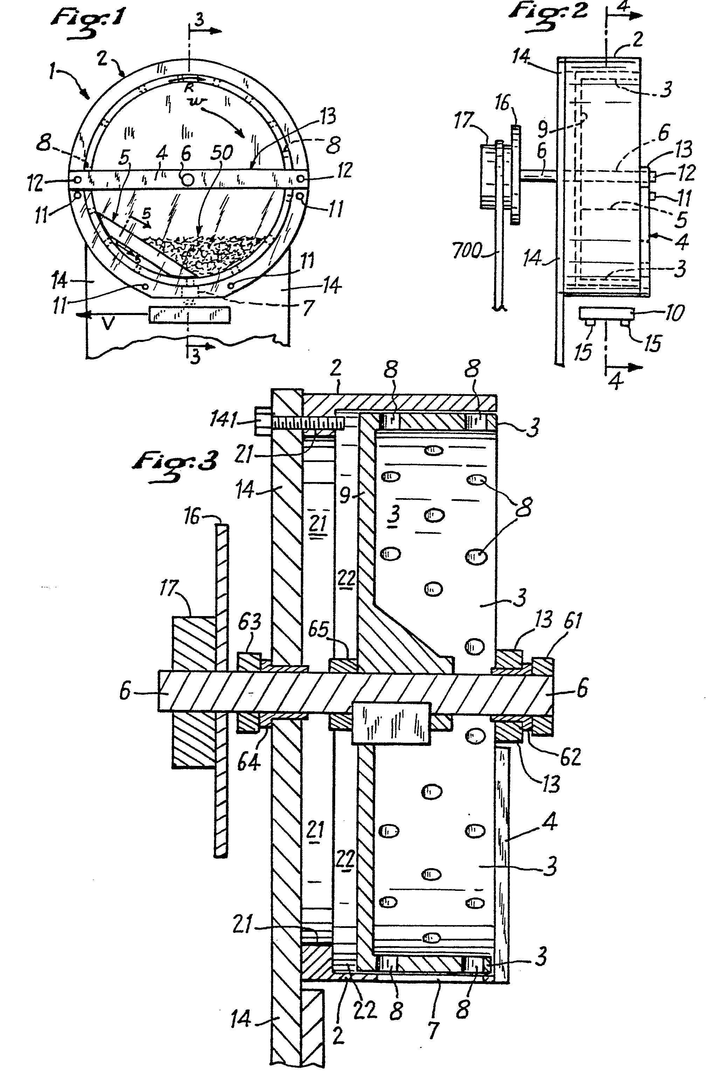

Figure 1 is a front elevational view of a dispenser according to the present invention. A dispenser 1 has a stationary outer member 2 having a slot 7 disposed in a lower most portion thereof. A rotating cylindrical member 3 has a plurality of bores 8 formed therethrough.

A supply of articles 50 are retained in the dispenser 1, each of the articles 50 being sized such that they may pass through any of the bores 8, for dispensing thereof. The articles 50 are retained between a transparent front wall 4 and a rotating rear wall 9. The rotating rear wall 9 is connected to the

12

cylindrical 3, and supports the cylindrical 3 for rotation.

A stationary bar 13 is connected by fasteners 12 to the stationary outer member 2. The bar 13 rotatably supports an axle 60, the axle 60 supporting the back wall 9 in the cylindrical 3 for rotation, the axle 60 being driven by a source of rotary motive power (not shown in Figure 1; shown in Figures 2 and 3).

A support 14 is connected to the stationary member 2 for support thereof. A blocking member 5 is stationary and is mounted so that at least a portion thereof is vertically above the slot 7. A plurality of fasteners 11, such as bolts or the like, retain the transparent front wall 4 to the stationary outer member 2. The blocking member 5 is in a preferred embodiment directly connected, as by adhesive, ultrasonic welding, or the like, to the front transparent wall 4.

A tray 10 is disposed directly beneath the dispenser 1 for receiving articles in a predetermined pattern therein, the tray moving with a velocity V, as indicated by the arrow labeled V in Figure 1.

The inner cylindrical member 3 rotates with a velocity R, as indicated by the arrow in Figure 1. The angular rotational velocity of the cylindrical member 3 in the back wall 9 is indicated by the arrow labeled w

13

in Figure 1.

In the preferred embodiment, the velocity of the inner cylindrical member 3, R, is equal in magnitude to the velocity V of the moving tray member, so that synchronized dispensing of the articles 50 onto the tray 10 occurs.

In operation, as the inner cylindrical 3 rotates, invdividual ones of the bores 8 move into communication with slot 7 as they pass adjacent to the slot 7. Any articles 50 in the bore 8 falls downward through the slot 7 and onto the tray 10. While a tray 10 is used in the preferred embodiment, such is not part of the dispensing means in and of itself, and the dispenser can be used for dispensing upon any object, whether moving or stationary.

Empty bores 8 pass in a clockwise direction as shown in Figure 1 beneath the blocking 5 preventing any of the articles 50 from entering the bore 8. As each empty bore 8 passes to the level of the articles 50 and beneath the level, gravity and the pressure of the overlying articles 50 force articles 50 to fill the bore 8. Then, as the bore 8 moves toward the slot 7, the bore 8 passes beneath the rightmost portion of the blocking 5, which isolates the articles 50 within the inside of the individual bore 8 and prevents the

14

pressure of the remaining overlying articles 50 from forcing any additional articles 50 into the bore 8 and through the slot 7.

Thus, the blocking 5 has two important functions. The first is to prevent passage of any additional articles 50 through the bore 8 when the bore 8 is in communication with the slot 7. This permits a predetermined amount of articles 50 to be dispensed each time an individual bore 8 is in communication with the slot 7.

The second important function of the blocking 5 is in preventing the pressure of the overlying articles 50 from affecting the downward velocity of the articles 50 contained in each individual bore 8. This would be important in situations where the dispenser 1 is periodically refilled, the height of the uppermost level of articles 50 changing from a level just beneath the uppermost edge of the front wall 4 and from a lowermost level which is just sufficient to supply articles 50 to bores 8. Here, the blocking 5 serves a third function, which is providing a relatively sharp angle for the articles 50 to collect so that as the level of the articles 50 decreases, the remaining articles 50 are concentrated at the intersection of the lowermost leading edge of the blocking 5 and the rotating cylindrical 3. This causes the level of articles 50 to remain sufficiently high to fill the bores 8 even when there is only a small amount of articles 50 remaining in the dispenser 1.

While the front transparent 4 is described as being transparent, the front wall 4 can be of any material whether transparent or opaque, so long as it serves to contain articles 50 in the dispenser 1.

Also, while a bar 13 is used as a support for the axle 6, such as support can be omitted, or can be fixed to any stationary member is desired, and need not have the shape of a bar. Any such variations are within the level of skill of anyone skilled in the art, and are contemplated as being within the scope of the present invention. Likewise, while threaded fasteners such as bolts, screws, or the like are used for the fasteners 11, and 12, any fastening means can be used for retaining the front wall to the stationary 2 to form an enclosure. For example, the wall 4 can be glued to the stationary 2, or it can be mounted to the separate stationary support, for example, and be spring-biased against the front face of the stationary 2. The blocking 5, while being taught as being adhesively attached to the front wall 4, can also be attached to it by threaded fasteners or the like. The blocking 5 can

16

also, if desired, be glued, ultrasonically bonded, rivoted, or fastened in any other manner to the front wall 4 and all such variations are contemplated as being within the scope of the present invention.

The stationary 2 is preferably made of stainless steel, as is the blocking 5, the bar 13, the inner cylindrical 3, and the back wall 9. Steel can also be used for the axle 6, the headed fasteners 11 and 12, and for the support 14. Nonetheless, use of any material is contemplated as being within the scope of the present invention, for example, aluminum, brass, copper, porcelin, wood, plastic, or any other sufficiently rigid material can be used for any of these parts. In the preferred embodiment, the front wall 4 is composed of clear plastic material to permit viewing of the level of the articles 50. However, front wall 4 can be of any material, including steel, porcelin, wood, brass, aluminum, or the like, and any material can be used as long as it is sufficiently strong to retain the articles 50 within the dispenser 1. All such variations are contemplated as being within the scope of the present invention.

Figure 2 is a side elevational view of the dispenser 1 shown in Figure 1, as seen from the left of Figure 1. Here, an end view of the tray 10 reveals a pair of supports 15, 15 directly underlying it for moving synchronized relationship to the inner cylindrical 3. The stationary 14 is seen as providing a support for the generally cylindrically shaped outer stationary 2. The rotating rear wall 9 as seen in dotted outline in Figure 2, as is the axle 6 in the inner cylindrical 3.

As seen in Figure 2, the axle 6 is fixedly connected to a disk 16 and a cylindrical 17, cylindrical 17 being adapated to be driven by a belt or any other rotary driving means such as a frictional drive member, a rotating drive wheel, or a gear, or any drive means for imparting rotary motion to the axle 6.

While the inner rotating 3 must have a generally cylindrical interior surface, its exterior surface need not be perfectly cylindrical but may vary somewhat, so long there is sufficient clearance between the outermost peripheral surface of the cylindrical rotating 3 in the innermost surface of the stationary 2. Furthermore, it is contemplated that the outer surface of the stationary 2 need not be generally cylindrical, but may have any shape, the cylindrical shape being the preferred embodiment due to the economy of material achieved. Also, the stationary 2 need not have a perfectly clyindrical inner surface, but may have a completely

18

irregular surface above the intended level of articles 50, so long as the surface provides sufficient clearance away from the outermost peripheral surface of the rotating cylindrical 3. All such variations are within the skill of anyone skilled in the art, and all such variations are contemplated as being within the scope of the present invention.

Figure 3 is a side sectional view of the dispenser 1 taken along line 3-3 of Figure 1. Figure 3 shows the detailed construction of the axle 6, and bearings which are advantageously used for rotatably supporting it. Figure 3 also shows a perspective view of the interior surface of the rotating cylindrical 3, showing a pattern of bores 8 arranged thereon.

A headed fastener, such as a bolt 141, is used to connect the support plate 14 to the stationary 2. As seen in Figure 3, the stationary 2 is a hollow, annular member having an innermost surface 21 shown in elevational view in Figure 3. This also achieves an economy of material; nonetheless, use of a solid rear wall having an opening to permit passage of the shaft 6 therethrough, is also contemplated as being within the scope of the present invention. As seen in Figure 3, the bores 8 are arranged in a generally rectangular pattern, in the slot 7 is sufficiently long to extend to approximately the outermost edges of the outermost bores 8, as measured from a vertical centerline of the cylindrical 3. The bores 8 are arrangeable in circular, polygonal, and other patterns as well. This permits passage of articles 50 through the bores 8 as they come into communication with the slot 7.

A ring-shaped 6 is fixedly connected to the axle 6 for rotation therewith, and together with the rotary anti-friction bearing 62 prevents retraction of the axle 6 from the bar 13. While the bearing 62 is described as being an anti-friction member, such as teflon or the like, it is contemplated that a ball bearing sleeve could be used, as could any rotary support means, and all such variations are contemplated as being within the scope of the present invention.

A key 91 is seen in elevational view as connecting a solid interior portion of the rear wall 9 with the axle 6. For strength, the rear wall 9 has ribs (unnumbered), one of which is shown above the axle 6, to provide additional support for the rotating cylindrical 3. The key 91 extends into the axle 6 preferably in a slot formed therein, as seen in Figure 3.

The rotating cylindrical 3 is adjacent and interior generally cylindrical surface 22 of the support 2, as seen in Figure 3 in elevation. A member 65 is fixed to the axle 6 and to the rotary rear wall 9 to prevent movement of the wall 9 along the shaft 6. The member 65 can be fixed to the axle 6 as by welding, adhesive, use of a setscrew or the like, and all such variations are contemplated as being within the scope of the present invention.

A bearing 63, 64 is provided to permit rotation of the axle 6 within the stationary plate 14. The member 64 can be an anti-friction sleeve formed of Teflon[®] material or the like, as in the preferred embodiment, or it can be a ball bearing, or any other rotary support means, and all such variations are contemplated as being within the scope of the present invention.

Also as seen in Figure 3, an auxiliary support 142 is fixedly connected to the support plate 14 to provide additional strength. However, such additional support 142, while being preferred, is not necessary to the present invention and any support means can be used to maintain the support 14 in a stationary position.

Figure 4 is a sectional front view taken along line 4-4 of Figure 2, showing the operation of the dispenser 1. As seen in Figure 4, a bore 8 is filled with articles 50 as it travels beneath the uppermost level of the articles 50. In this position of the rotating cylindrical 3, another bore 8 has just emptied its contents of articles 50 through the slot 7. As seen in Figure 4, the articles 50 fold downward with a velocity W which varies with their vertical drop. As seen in Figure 4, there is a small clearance between the rotating 3 and the stationary 2.

The rear wall 9 is seen in elevational view, and the stationary blocking 5 is seen in sectional view in Figure 4. The remainder of the dispenser 1 is broken away. Arrows show the peripheral velocity R and the rotation of velocity w of the rotating cylindrical 3 and the rear wall 9.

Figure 5 is a sectional side view taken generally along line 5-5 of Figure 1. It shows the attachment of the blocking 5 to the front wall 4 along surface 59, which may be composed of a strong adhesive such as a poxyglue, or maybe an ultrasonically welded portion. As discussed hereinabove other means for connecting the blocking 5 to the wall 4, such as a headed fastener, tends inserted between the wall 4 and the blocking 5 and holes formed therein, acting as dowels, or the like. As seen in Figure 5, there is a relatively small clearance between the leftmost end of the blocking 5 along its length and the rear wall 9. This clearance, as well as the clearance between the outermost portion of the rotary clyindrical 3 and the innermost surface of the stationary 2, at least in the region below the level of the articles 50 from the region just below the rightmost edge of the blocking 5 and the rightmost extent of the articles 50, must be sufficiently small to prevent entry of any of the articles 50 there between, so as to avoid loss of articles 50 in the clearances. This same is true of the clearance between the lowermost surface of the blocking 5 and the innermost surface of the rotating 3. For sufficiently small articles 50, the blocking 5 may actually be in sliding contact with the inner cylindrical 3, and the inner cylindrical 3 may be required to be in sliding contact with at least a portion of the stationary 2. However, in the preferred embodiment, the articles 50 are decorettes having a relatively small size, and the clearances are at least 1/1000 of an inch. However, it is contemplated that smaller or larger clearances are within the scope of the present invention.

Furthermore, while decorettes 50 are contemplated as being dispensed in the preferred embodiment, the invention is not limited thereto. For example, other articles can be dispensed such as marbles, pieces of chocolate such as chocolate chips, pieces of fruit such as raisins or the like, ball bearings, and any other articles can be dispensed. In the case of chocolate being dispensed, some chocolate will eventually fill all of the clearance spaces, but such filling, while increasing the frictional forces involved, would not prevent operation of the present invention.

While the front wall 4, and the rear wall 9 are shown as being planar, any front wall and rear wall configurations can be used, such as conical, semi-spherical, corregated, or the like. The primary limitation on the shape of the rear wall 9 is that at least in the region of the gap between the blocking 5 and the rear wall 9, the gap being sufficiently small that filling of the bores 8 continues to be possible. In this connection, even a very large gap could exist and yet permit operation, although eventually space beneath the blocking 5, existing to the left of the slot 7 and above it in Figure 4, would tend to become filled with the articles 50 and thus increase the frictional drag on the rotating cylinder 3. Nonetheless, this would result in a workable though not optimable arrangement, and such is not the preferred embodiment.

Figure 6 is a top elevational view of the tray 10 useable in combination with the present invention. The tray 10 has a recess defined by a ledge 100, within which is centered an object (unnumbered in Figure 6) about which it is desired to dispense the artciles 50.

24

Individual groupings of dispensed decorettes are numbered as groupings 55, 56, 57, and 58. These groupings result from the arrangement of bores 8 in a generally rectangular pattern, as well as the synchronized speed of the trays 10 and bores cylindrical rotating 3. A circular or polygonal grouping can also be used.

While a generally rectangular pattern is shown, the present invention is not limited thereto, and any pattern desired could be used. In particular, a generally circular pattern of decorettes could be applied through use of more than four bores 8 in a pattern. Also, with the dispenser 1 is to be used for applying decorettes in a pattern upon a moving sheet, the pattern can be so formed as to make any design, letter, shape, or word, such as a company name or the like.

As the tray 10 moves to another station air is supplied to whirl the decorettes 50 about the object, which is a sandwich cookie, so as to cause the decorettes 50 to adhere about the periphery of the central layer of the sandwich cookie.

The present invention is capable of achieving the above-mentioned dispensing results, and while a preferred embodiment has been shown and illustrated, the

25

present invention is not limited thereto but may be otherwise embodied within the scope of the following claims.

0204595

26

WHAT IS CLAIMED IS:

1. A dispenser, comprising:

an inner rotating member;

an outer stationary member adapted to receive said inner member;

a plurality of recesses being disposed in said inner member and adapted to receive articles therein;

and a blocking means for preventing articles from entering into said recesses;

and an opening in said stationary member for dispensing articles;

whereby articles in said recesses are dispensed through said opening.

2. A dispenser as claimed in claim 1, wherein said means for blocking is disposed adjacent to said inner member.

3. A dispenser as claimed in claim 2, wherein said opening is disposed adjacent said inner member on an opposite side of said inner member from said means for blocking.

4. A dispenser as claimed in claim 1, further comprising:

a rear wall rotating with said inner member and supporting said inner member;

27

and a shaft rotatably supporting said rear wall.

5. A dispenser as claimed in claim 4, further comprising a front wall extending at least from a lowermost region of said inner member, said front wall being stationary.

6. A dispenser as claimed in claim 5, wherein said front wall extends upwardly a predetermined distance;

whereby said front wall cooperates with said back wall to retain articles there between.

7. A dispenser as claimed in claim 3, further comprising a rear wall and a front wall, said rear wall being fixedly connected for rotation with said inner member, said front wall being stationary;

whereby articles are retained between said rear wall, said front wall, and said inner member.

8. A dispenser as claimed in claim 7, wherein said means for blocking is a stationary member located vertically directly above said opening and on an opposite side of inner member from said opening;

whereby recesses passing beneath said means for blocking can empty into said opening without receiving additional articles.

9. A dispenser as claimed in claim 6, wherein each of said recesses communicates within an interior surface of said inner member and with an exterior surface of

28

said inner member;

whereby each of said recesses receives articles during rotation of said inner member, and discharges articles under the influence of gravity while each of said recesses is in communication with said opening.

10. An apparatus for dispensing, comprising:

a stationary outer member;

an inner rotating member;

a plurality of recesses in said inner member;

said inner member having an inner surface and an outer surface;

each of said recesses being in communication with said inner surface and with said outer surface;

an opening disposed in a portion of said stationary outer member, said opening being adapted to permit passage of articles therethrough;

each of said recesses being adapted to receive articles therein;

and a means for blocking articles from entering each of said recesses, said means for blocking being stationary;

whereby articles received in said recesses are dispensed through said opening.

11. An apparatus as claimed in claim 10, further comprising a rear wall rotatably supporting said inner member;

and a shaft for rotatably driving said rear wall.

12. An apparatus as claimed in claim 11, further comprising a front wall extending from a region adjacent said means for blocking upwardly so as to retain articles between said rear wall and said front wall.

13. An apparatus as claimed in claim 12, wherein said front wall is stationary;

and said means for blocking is a solid member fixedly connected to said front wall.

14. An apparatus as claimed in claim 13, further comprising:

a means for driving said shaft;

an open region between said front wall and said inner member, said open region being adapted to receive additional articles for dispensing;

whereby additional articles can be added to said dispenser without stopping rotation thereof.

15. An apparatus as claimed in claim 14, wherein said recesses are arranged in a predetermined pattern;

said opening in said outer member being in elongated slot adapted to communicate with each of said openings.

16. An apparatus for dispensing articles in a pattern upon a moving object, comprising in combination:

30

a moving object disposed beneath a dispenser outlet;

said dispenser outlet being located in a stationary outer member;

said stationary outer member having an opening therein;

a rotatable inner member being disposed in said opening;

said rotatable inner member having an inner periphery and an outer periphery;

a means for causing rotation of said rotatable inner member;

a plurality of means for receiving articles, located in said rotatable inner member;

each of said plurality of means for receiving articles being in communication with said inner periphery and with said outer periphery;

and a means for blocking articles from entering each of said plurality a means for receiving articles, as they pass adjacent to said means for blocking articles;

whereby articles are dispensed from said inner periphery through said plurality of means for receiving articles through said opening in said stationary outer member.

17. An apparatus as claimed in claim 16, further comprising:

a rear wall fixedly connected to said rotatable inner member;

and a front wall which is stationary;

whereby articles are retained within said rotatable inner member between said rear wall and said front wall.

18. An apparatus as claimed in claim 17, wherein said means for blocking comprises a member disposed adjacent said rotatable inner member, said opening being disposed on an opposite side of said rotatable inner member from said means for blocking;

whereby articles are prevented from entering any of said plurality of means for receiving articles when any of said plurality of means for receiving articles are adjacent said blocking member, such that articles in each of said plurality of means for receiving articles fall out through said opening and onto the moving object.

19. An apparatus as claimed in claim 18, wherein said front wall is transparent;

whereby viewing of the articles is possible during operation.

20. An apparatus as claimed in claim 18, wherein said plurality of means for receiving articles are

32

arranged in a predetermined pattern;

    whereby the articles are dispensed in a predetermined pattern upon the moving object.

Fig.1

Fig.2

Fig.3

Fig. 4

Fig. 5

Fig. 6